# EUROPEAN PATENT APPLICATION

(11) **EP 4 361 792 A1**
(43) Date of publication of application: **01.05.2024**
(21) Application number: 23204911.4
(22) Date of filing: 20.10.2023
(51) Int. Cl.: G06F 3/14, G09G 5/00

(54) **ELECTRONIC DISPLAY DEVICE FOR SIMULATING MECHANICAL DISPLAY AND DATA STORAGE METHOD THEREOF**

(30) Priority: 24.10.2022 CN 202211301860
(71) Applicant: Weihai Ploumeter Co., Ltd., Weihai, Shandong 264203 (CN)
(72) Inventor: FU, Tao, Weihai, 264203 (CN); XING, Yanyan, Weihai, 264203 (CN)
(74) Representative: J A Kemp LLP

(57) **Abstract**

The application relates to an electronic display device simulating mechanical display and a data storage method thereof. The electronic display device comprises: a display screen, a first processor, a first display driver, a second processor, and a second display driver; the display screen is divided into two independent regions, which are region A and region B; the first processor is connected with the first display driver; the first processor is used for driving the region A to display real-time data by the first display driver; the first processor communicates with the second processor, and the first processor transmits the cumulative flow to the second processor; the second processor is connected with the second display driver; the second processor is used for driving the region B to display the cumulative flow stored in the region through the second display driver; when an instrument occurs a fault, the first processor is not capable of working normally, the region A is not capable of displaying normally, but the region B displays the cumulative flow normally. When the electronic instrument fails, it can still display instrument data normally, and the accuracy of the instrument data is high.

## Description

### FIELD

The application relates to the field of instrument data storage and display, in particular to an electronic display device for simulating mechanical display and a data storage method thereof.

### BACKGROUND

An intelligent instrument is an electronic instrument, which usually has one or more display screens for displaying various data of the instrument. When the instrument of ordinary liquid crystal screen fails, the display screen is unlit, instrument data is not displayed, and the data cannot be read remotely or on site, which adversely affects subsequent works.

### SUMMARY

A purpose of the application is to provide an electronic display device for simulating mechanical display and a data storage method thereof, so as to solve a technical problem that instrument data is not displayed when an electronic instrument fails.

In order to achieve the above object, the application provides the following solutions:
An electronic display device for simulating mechanical display comprises a display screen, a first processor, a first display driver, a second processor, and a second display driver;
the display screen is divided into two independent regions, which are region A and region B;
the first processor is connected with the first display driver; the first processor is used for driving the region A to display real-time data by the first display driver; the real-time data comprises a cumulative flow and an instantaneous flow;
the first processor communicates with the second processor, and the first processor transmits the cumulative flow to the second processor;
the second processor is connected with the second display driver; the second processor is used for driving the region B to display the cumulative flow stored in the region A through the second display driver;
when an instrument occurs a fault, the first processor is not capable of working normally, the region A is not capable of displaying normally, but the region B displays the cumulative flow normally.

Optionally, it also comprises: a first memory connected with the first processor;
the first memory comprises a first storage area and a second storage area; the first storage area is used for storing real-time data; the second storage area is used for storing the real-time data after the real-time data stored in the first storage area passing the verification.

Optionally, it further comprises: a second storage area connected with the second processor;
the second memory comprises a third storage area and a fourth storage area; the third storage area is used for storing a cumulative flow having a large time stamp in the first storage area and the second storage area; the fourth storage area is used for storing the cumulative flow after the cumulative flow stored in the third storage area passing the verification cumulative flow

Optionally, it further comprises: a first power supply and a second power supply;
the first power supply is connected with the first processor, and the second power supply is connected with the second processor.

A data storage method of the electronic display device for simulating mechanical display, comprising:
packaging the cumulative flow into a piece of packet data by the first processor, verifying the packet data, storing the packet data passed verification to the first memory, and transmitting the packet data passed verification to the second processor;
verifying received packet data by the second processor, and storing the packet data which passes secondary verification.

Optionally, the step of packaging the cumulative flow into a piece of packet data by the first processor, verifying the packet data, storing the packet data passed verification to the first memory, and transmitting the packet data passed verification to the second processor specifically comprises:
executing Cyclic Redundancy Check verification on the packet data to verify whether the packet data is normal; when the packet data is normal, obtaining a first Cyclic Redundancy Check verification value and storing the packet data to the first storage area; when the packet data is not normal, discarding the packet data; the packet data contains a time stamp;
reading the packet data stored in the first storage area, and performing Cyclic Redundancy Check verification again to verify whether the packet data stored in the first storage area is normal; when the packet data stored in the first storage area is normal, obtaining a second Cyclic Redundancy Check verification value; when the packet data is not normal, discarding the packet data;
when the first Cyclic Redundancy Check verification value is the same as the second Cyclic Redundancy Check verification value, storing the packet data to the second processor; when the first Cyclic Redundancy Check verification value is different from the second Cyclic Redundancy Check verification value, the first processor does not display and refresh the packet data in the region A, and does not transmit the packet data to the second processor.

Optionally, the step of storing the packet data to the second processor specifically comprises:
comparing the time stamp of the packet data in the first storage area with the time stamp of the packet data in the second storage area, and storing the packet data having a large time stamp to the second processor.

Optionally, the step of verifying received packet data by the second processor, and storing the packet data which passes secondary verification, specifically comprises:
executing Cyclic Redundancy Check verification on the packet data to verify whether the packet data is normal; when the packet data is normal, obtaining a third Cyclic Redundancy Check verification value and storing the packet data to the third storage area; when the packet data is not normal, discarding the packet data;
reading the packet data stored in the third storage area, and performing Cyclic Redundancy Check verification again to verify whether the packet data stored in the third storage area is normal; when the packet data stored in the third storage area is normal, obtaining a fourth Cyclic Redundancy Check verification value; when the packet data is not normal, discarding the packet data;
when the third Cyclic Redundancy Check verification value is the same as the fourth Cyclic Redundancy Check verification value, storing the packet data to the fourth storage area; when the third CRC verification value is different from the fourth CRC verification value, does not update a cumulative flow currently displayed in the region B.

According to specific embodiments provided by the application, the application discloses the following technical effects: the application provides an electronic display device for simulating mechanical display, the display screen is at least divided into two independent regions, the region A is used for displaying real-time data, and the region B is used for displaying stored cumulative flow; the display screen is driven by two independent processors; when the electronic display device fails, the first processor cannot work normally, and the region A of the display screen cannot display normally, the second processor still can work, and the stored cumulative flow is displayed in the region B of the display screen. Failure of the instrument can be judged through the region A, and the data can be reserved through the region B.

Moreover, the application also discloses a data storage method of the electronic display device for simulating mechanical display, which verifies packet data for many times in two independent processors to ensure the accuracy of the data.

### BRIEF DESCRIPTION OF DRAWINGS

In order to explain more clearly the embodiments of the application or the technical solution in the prior art, the drawings required for use in the embodiments will be briefly described below, and it will be obvious that the drawings described below are only some embodiments of the application, and other drawings may be obtained from these drawings without creative effort for a person skilled in the art.

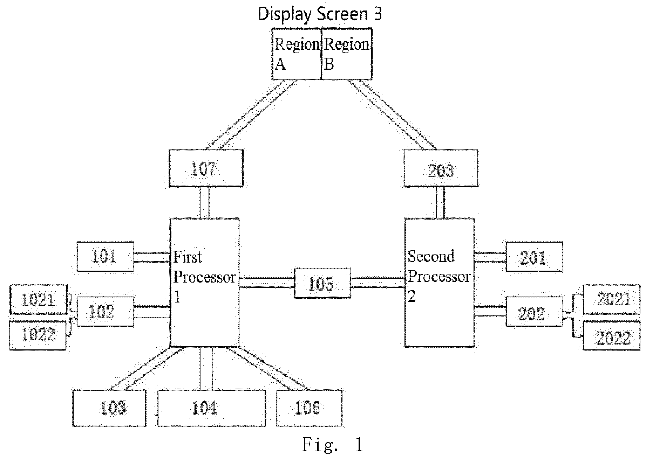

Fig. 1 is a structural diagram of an electronic display device for simulating mechanical display provided by the present application.

### DETAILED DESCRIPTION

A clear and complete description of the technical solution of the embodiments of the application will be given below in conjunction with the drawings in which the embodiments of the application are described, and it will be apparent that the described embodiments are only part of the embodiments of the application, not all of them. Based on the embodiments in the present application, all other embodiments obtained by an ordinary skilled person in the art without making creative efforts fall within the scope of protection of the present application.

A purpose of the application is to provide an electronic display device for simulating mechanical display and a data storage method thereof, when an electronic instrument fails, the instrument data still can be displayed normally, and the data cannot be lost.

In order that the above purpose, features, and advantages of the present application, can be more clearly understood, the application is described in further detail below in conjunction with the drawings and detailed description.

Fig. 1 is a structural diagram of an electronic display device for simulating mechanical display provided by the present application, as shown in Fig. 1, an electronic display device for simulating mechanical display (i.e., an electronic instrument) comprises: one display screen 3, a first processor 1, a first display driver 107, a second processor 2, and a second display driver 203; the display screen 3 is divided into two independent regions, which are a region A and a region B; the first processor 1 is connected with the first display driver 107; the first processor 1 is used for driving the region A to display real-time data by the first display driver 107; the real-time data comprises a cumulative flow and an instantaneous flow, wherein the real-time data further comprises a flow state and a temperature; the first processor 1 communicates with the second processor 2, and the first processor 1 transmits the real-time data to the second processor 2; the second processor 2 is connected with the second display driver 203; the second processor 2 is used for driving the region B to display the cumulative flow stored in the region A through the second display driver 203; when an instrument occurs a fault, the first processor 1 is not capable of working normally, the region A is not capable of displaying normally, but the region B displays the cumulative flow normally.

In practical application, the present application further comprises: a first memory 102 connected with the first processor 1; the first memory 102 comprises a first storage area 1021 and a second storage area 1022; the first storage area 1021 is used for storing the cumulative flow; the second storage area 1022 is used for storing the cumulative flow after the cumulative flow stored in the first storage area 1021 passing the verification

In practical application, the present application further comprises: a second memory 202 connected with the second processor 2; the second memory 202 comprises a third storage area 2021 and a forth storage area 2022; the third storage area 2021 is used for storing a cumulative flow having a large time stamp in the first storage area 1021 and the second storage area 1022; the forth storage area 2022 is used for storing the cumulative flow after the cumulative flow stored in the third storage area 2021 passing the verification.

In practical application, the present application further comprises: a first power supply 101 and a second power supply 201; the first power supply 101 is connected with the first processor 1, and the second power supply 201 is connected with the second processor 2.

In practical application, the display screen 3 is divided into at least two independent regions, the region A is used for displaying real-time data, and the region B is used for storing display of cumulative flow. There are two processors which are independently operated, which are a first processor 1 and a second processor 2; the two processors have independent power supply, storage and display drivers; the two processors transmit data through a communication module 105, and the two processors can transmit data through different modes of communication.

The first processor 1 periodically collects a sensor signal, displays the real-time data to the region A of the display screen 3 by calculation processing, and stores the cumulative flow in the real-time data to the first memory 102 after packaging and verifying; the first processor 1 and the second processor 2 communicate periodically to send the data in the first memory 102 to the second processor 2, the second processor 2 verifies the data, and stores the data in the second memory 202 after passing verification, and displays the data in the region B of the display screen 3; the region A and region B of the display screen 3 are simultaneously displayed and are independently driven by the first processor 1 and the second processor 2, respectively, and are not affected by each other.

When the instrument fails, the first processor 1 fails to work normally, and the region A of the display screen 3 fails to display normally, the second processor 2 can still work normally, and the data in the second memory 202 is retained for display in the region B of the display screen 3. Failure of the instrument can be judged through the region A of the display screen 3, and the data can be reserved through the region B of the display screen 3.
the present application further provides a data storage method of the electronic display device for simulating mechanical display comprising:
packaging the cumulative flow into a piece of packet data by the first processor 1, verifying the packet data, storing the packet data passed verification to the first memory 102, and transmitting the packet data passed verification to the second processor 2; verifying received packet data by the second processor 2, and storing the packet data which passes secondary verification.

In practical application, the step of packaging the cumulative flow into a piece of packet data by the first processor 1, verifying the packet data, storing the packet data passed verification to the first memory 102, and transmitting the packet data passed verification to the second processor 2 comprises: executing Cyclic Redundancy Check verification on the packet data to verify whether the packet data is normal; when the packet data is normal, obtaining a first Cyclic Redundancy Check verification value and storing the packet data to the first storage area 1021; when the packet data is not normal, discarding the packet data; the packet data contains a time stamp.

Reading the packet data stored in the first storage area 1021, and performing Cyclic Redundancy Check verification again to verify whether the packet data stored in the first storage area 1021 is normal; when the packet data stored in the first storage area is normal, obtaining a second Cyclic Redundancy Check verification value; when the packet data is not normal, discarding the packet data.

When the first Cyclic Redundancy Check verification value is the same as the second Cyclic Redundancy Check verification value, storing the packet data to the second processor 1022; when the first Cyclic Redundancy Check verification value is different from the second Cyclic Redundancy Check verification value, the first processor 1 does not display and refresh the packet data in the region A, and does not transmit the packet data to the second processor 2.

In practical application, the step of storing the packet data to the second processor 1022 specifically comprises: comparing the time stamp of the packet data in the first storage area 1021 with the time stamp of the packet data in the second storage area 1022, and storing the packet data having a large time stamp to the second processor 1022.

In practical application, the step of verifying received packet data by the second processor, and storing the packet data which passes secondary verification, specifically comprises:
executing Cyclic Redundancy Check verification on the packet data to verify whether the packet data is normal; when the packet data is normal, obtaining a third Cyclic Redundancy Check verification value and storing the packet data to the third storage area 2021; when the packet data is not normal, discarding the packet data.

Reading the packet data stored in the third storage area 2021, and performing Cyclic Redundancy Check verification again to verify whether the packet data stored in the third storage area 2021 is normal; when the packet data stored in the third storage area is normal, obtaining a fourth Cyclic Redundancy Check verification value; when the packet data is not normal, discarding the packet data.

When the third Cyclic Redundancy Check verification value is the same as the fourth Cyclic Redundancy Check verification value, storing the packet data to the fourth storage area 2022; when the third CRC verification value is different from the fourth CRC verification value, the second processor 2 displays the packet data stored in the third storage area 2021 to the region B.

The first processor 1 serves as a main processor of the instrument and has an independent power supply 101 for electricity supply. The flow module 103 serves as a sensor, collecting a signal, and transmits a flow signal to the first processor 1 which calculates a cumulative flow, an instantaneous flow, a flow pattern, a temperature, and other data according to a collected signal. The first memory 102 of the first processor 1 and the second memory 202 of the second processor 2 are each divided into two storage areas, which are a first storage area 1021 and a second storage area 1022, and a third storage area 2021 and a fourth storage area 2022.

The first processor 1 packages all the data to be stored into a piece of data, the data contains a time stamp accurate to seconds, performs Cyclic Redundancy Check verification on this piece of data, verifies whether stored data is normal and is used for subsequent Cyclic Redundancy Check value for comparative verification, and packages a Cyclic Redundancy Check calculation result and this piece of metering data again for storage. Repackaged data will be stored in two independent storage areas (first storage area 1021 and second storage area 1022) in the first storage area 102 at the same time. After the storage is completed in the first storage area 1021, the data in this storage area will be read out for Cyclic Redundancy Check verification, and the two verification values will be compared to judge whether there is an error in the storage process. When the two Cyclic Redundancy Check values are the same, the verification will pass, otherwise the verification will not pass. Only after the verification is passed, the storage and verification is performed in the second storage area 1022, otherwise, the storage of the second storage area 1022 is not performed. After the first memory area 1021 fails to be verified, the first processor 1 does not refresh the display and does not transmit data to the second processor 2 this time.

After verification of the first storage area 1021 is passed, storage is performed in the second storage area 1022. After the completion of the storage in the second storage area 1022, the data in this storage area are read out for verification, and after the verification is passed, the data in the first storage area 1021 and the data in the second storage area 1022 are read out, the time stamps of the two data are compared, and corresponding data with larger time stamps is written into the second memory 202 of the second processor 2 and displayed in the region A of the display screen 3.

When the storage in the second storage area 1022 is completed, and the verification fails, the data is not transmitted to the second processor 2 and the region A of the display screen 3 is not updated.

After receiving the data, the second processor 2 packages all the data to be stored into a piece of data, which contains a time stamp accurate to seconds and a Cyclic Redundancy Check value, the data will be stored in two independent storage areas (the third storage area 2021 and the fourth storage area 2022) in the second memory 202, after being stored in the third storage area 2021, the data in this storage area is read out for Cyclic Redundancy Check, and comparing the two check values is used to judge whether there is an error during transmission and storage process, and when the two Cyclic Redundancy Check values are the same, the verification is passed, otherwise the verification is not passed, and only after the verification is passed, the storage and verification is performed in the fourth storage area 2022, otherwise the storage in the fourth storage area 2022 will be not performed. After the third memory area 2021 fails to be verified, the second processor 2 does not refresh the display this time.

After verification of the third storage area 2021 is passed, storage is performed in the fourth storage area 2022. After the completion of the storage in the fourth storage area 2022, the data in this storage area are read out for verification, and after the verification is passed, the data in the third storage area 2021 and the data in the fourth storage area 2022 are read out, the time stamps of the two data are compared, and corresponding data with larger time stamps is displayed in the region B of the display screen 3.

When the storage of the fourth storage area 2022 is completed and the verification fails, the data of the third storage area 2021 is displayed in the region B of the display screen 3.

The present application also comprises a press key 106 through which the first processor 1 is controlled to perform corresponding operations.

When the first processor 1 fails, each functional module of the first processor 1 no longer works normally, a host computer communication 104 can no longer transmit data of a sheet to a host computer platform or a cloud platform, the region A of the display screen 3 is no longer lit, and real-time data of the meter cannot be obtained. Since the second processor 2 and the first processor 1 have independent power supplies, storages, and processing systems, the damage of the first processor 1 does not affect normal operation of the second processor 2, and the second processor 2 will display last data transmitted by the first processor 1 on the region B of the display screen 3, so that the stored data can be read normally without loss.

Embodiments in this specification are described in a progressive manner and each embodiment focuses on differences from other embodiments. Same and similar parts between the embodiments can be referred to each other. As for the system disclosed in an embodiment, since it corresponds to a method disclosed in an embodiment, the description is relatively simple, and the relevant parts can be referred to described parts of the method.

In this paper, specific examples are applied to explain principles and implementation of the application, and the above description of the embodiments is only used to help to understand methods and core ideas of the application, meanwhile, for those of ordinary skilled in the art, according to the idea of the present application, there will be changes in manners of specific implementation and application scope. In conclusion, contents of this specification should not be understood as limitations of the present application.

## Claims

1. An electronic display device for simulating mechanical display, **characterized in that**, comprising:
a display screen, a first processor, a first display driver, a second processor, and a second display driver; the display screen is divided into two independent regions, which are a region A and a region B;
the first processor is connected with the first display driver; the first processor is used for driving the region A to display real-time data by the first display driver; the real-time data comprises a cumulative flow and an instantaneous flow;
the first processor communicates with the second processor, and the first processor transmits the cumulative flow to the second processor;
the second processor is connected with the second display driver; the second processor is used for driving the region B to display the cumulative flow stored in the region A by the second display driver;
when an instrument occurs a fault, the first processor is not capable of working normally, the region A is not capable of displaying normally, but the region B displays the cumulative flow normally.

2. The electronic display device for simulating mechanical display according to claim 1, **characterized in** further comprising:
a first memory connected with the first processor; the first memory comprises a first storage area and a second storage area; the first storage area is used for storing the real-time data; the second storage area is used for storing the real-time data after the real-time data stored in the first storage area passing the verification.

3. The electronic display device for simulating mechanical display according to claim 2, **characterized in** further comprising:
the second storage area connected with the second processor; the second memory comprises a third storage area and a fourth storage area; the third storage area is used for storing a cumulative flow having a large time stamp in the first storage area and the second storage area; the fourth storage area is used for storing the cumulative flow after the cumulative flow stored in the third storage area passing the verification.

4. The electronic display device for simulating mechanical display according to claim 3, **characterized in** further comprising:
a first power supply and a second power supply; the first power supply is connected with the first processor, and the second power supply is connected with the second processor.

5. A data storage method of an electronic display device for simulating mechanical display, **characterized in** applied to the electronic display device for simulating mechanical display according to any one of claims 1-4, the data storage method comprises:
packaging the cumulative flow into a piece of packet data by the first processor, verifying the packet data, storing the packet data passed verification to the first memory, and transmitting the packet data passed verification to the second processor;
verifying received packet data by the second processor, and storing the packet data which passes secondary verification.

6. The data storage method of an electronic display device for simulating mechanical display according to claim 5, **characterized in that**, the step of packaging the cumulative flow into a piece of packet data by the first processor, verifying the packet data, storing the packet data passed verification to the first memory, and transmitting the packet data passed verification to the second processor specifically comprises:
executing Cyclic Redundancy Check verification on the packet data to verify whether the packet data is normal; when the packet data is normal, obtaining a first Cyclic Redundancy Check verification value and storing the packet data to the first storage area; when the packet data is not normal, discarding the packet data; the packet data contains a time stamp;
reading the packet data stored in the first storage area, and performing Cyclic Redundancy Check verification again to verify whether the packet data stored in the first storage area is normal; when the packet data stored in the first storage area is normal, obtaining a second Cyclic Redundancy Check verification value; when the packet data is not normal, discarding the packet data;
when the first Cyclic Redundancy Check verification value is the same as the second Cyclic Redundancy Check verification value, storing the packet data to the second processor; when the first Cyclic Redundancy Check verification value is different from the second Cyclic Redundancy Check verification value, the first processor does not display and refresh the packet data in the region A, and does not transmit the packet data to the second processor.

7. The data storage method of an electronic display device for simulating mechanical display according to claim 6, **characterized in that**, the step of storing the packet data to the second processor specifically comprises:
comparing the time stamp of the packet data in the first storage area with the time stamp of the packet data in the second storage area, and storing the packet data having a large time stamp to the second processor.

8. The data storage method of an electronic display device for simulating mechanical display according to claim 7, **characterized in that**, the step of verifying received packet data by the second processor, and storing the packet data which passes secondary verification, specifically comprises:
executing Cyclic Redundancy Check verification on the packet data to verify whether the packet data is normal; when the packet data is normal, obtaining a third Cyclic Redundancy Check verification value and storing the packet data to the third storage area; when the packet data is not normal, discarding the packet data;
reading the packet data stored in the third storage area, and performing Cyclic Redundancy Check verification again to verify whether the packet data stored in the third storage area is normal; when the packet data stored in the third storage area is normal, obtaining a fourth Cyclic Redundancy Check verification value;
when the packet data is not normal, discarding the packet data; when the third Cyclic Redundancy Check verification value is the same as the fourth Cyclic Redundancy Check verification value, storing the packet data to the fourth storage area; when the third CRC verification value is different from the fourth CRC verification value, the second processor displays the packet data stored in the third storage area to the region B without updating a cumulative flow currently displayed in the region B.
